# EUROPÄISCHE PATENTSCHRIFT

(11) **EP 0 730 613 B1**
(45) Veröffentlichungstag und Bekanntmachung des Hinweises auf die Patenterteilung: **27.01.1999**
(21) Anmeldenummer: 95901395.4
(22) Anmeldetag: 18.11.1994
(51) Int. Cl.: C08F 290/14, C08F 290/06, C08G 18/67, C09D 175/14, C09D 151/08

(54) **VERFAHREN ZUR HERSTELLUNG EINER ZWEISCHICHTIGEN LACKIERUNG UND WÄSSRIGE LACKE**
METHOD OF PRODUCING A DOUBLE-LAYER COATING OF PAINT AND A WATER-BASED PAINT
PROCEDE PERMETTANT DE REALISER UN REVETEMENT DE PEINTURE A DEUX COUCHES, ET PEINTURES AQUEUSES

(30) Priorität: 23.11.1993 DE 4339870
(43) Veröffentlichungstag der Anmeldung: 11.09.1996
(73) Patentinhaber: BASF Coatings Aktiengesellschaft, 48165 Münster (DE)
(72) Erfinder: LETTMANN, Bernhard, D-48151 Münster (DE); REUSMANN, Gerhard, D-48147 Münster (DE); WEGNER, Egon, D-48143 Münster (DE)
(86) Internationale Anmeldenummer: EP9403824
(87) Internationale Veröffentlichungsnummer: WO9514721

(56) Entgegenhaltungen:
- EP-A- 0 098 752
- EP-A- 0 183 119
- EP-A- 0 350 040
- EP-A- 0 401 565
- EP-A- 0 424 705
- EP-A- 0 522 420
- DE-A- 4 010 176

## Beschreibung

Die Erfindung betrifft ein Verfahren zur Herstellung einer zweischichtigen Lackierung auf einer Substratoberfläche, bei dem
(1) ein pigmentierter wäßriger Basislack auf die Substratoberfläche aufgebracht wird,
(2) aus dem in Stufe (1) aufgebrachten Basislack ein Polymerfilm gebildet wird,
(3) auf der so erhaltenen Basislackschicht ein transparenter Decklack aufgebracht wird und anschließend
(4) die Basislackschicht zusammen mit der Decklackschicht eingebrannt wird.

Die Erfindung betrifft auch wäßrige Lacke, die als pigmentierte Basislacke in diesem Verfahren einsetzbar sind.

Das oben beschriebene Verfahren wird insbesondere zur Herstellung von zweischichtigen Automobil-Decklackierungen des basecoat-clearcoat-Typs eingesetzt. Dabei hängt die Qualität der nach diesem Verfahren hergestellten zweischichtigen Lackierung ganz wesentlich von dem in Stufe (1) des Verfahrens eingesetzten wäßrigen Basislack ab.

In der EP-A-353 797 werden wäßrige Lacke beschrieben, die als Basislacke in Stufe (1) des oben beschriebenen Verfahrens eingesetzt werden können. Die in der EP-A-353 797 beschriebenen wäßrigen Lacke enthalten als Bindemittel ein Polymer, das erhältlich ist, indem Acrylat und/oder Methacrylatmonomere in Gegenwart eines anionischen Polyurethanharzes, das auch Vinylgruppen enthalten kann, einer durch wasserlösliche Initiatoren gestarteten Emulsionspolymerisation unterworfen werden.

Wenn die in der EP-A-353 797 beschriebenen wäßrigen Lacke als Basislacke in dem oben beschriebenen Verfahren eingesetzt werden, werden zweischichtige Lackierungen erhalten, die eine unbefriedigende Stabilität gegenüber kondensierter Feuchtigkeit aufweisen. Dieser Nachteil tritt insbesondere bei Reparaturlackierungen, die nur bei Temperaturen von bis zu 80 °C ausgehärtet werden, zutage. Außerdem zeigen die in der EP-A-353 797 beschriebenen wäßrigen Lacke eine unbefriedigende Lagerstabilität, wenn sie ein Melaminharz als zusätzliche Bindemittelkomponente enthalten.

In der EP-A-297 576 wird ein Verfahren zur Herstellung von zweischichtigen Lackierungen der oben beschriebenen Art beschrieben, wobei als Basislack wäßrige Lacke eingesetzt werden, die eine wäßrige Dispersion eines Polymeren enthalten, die erhältlich ist, indem ethylenisch ungesättigte Monomere in einer wäßrigen Dispersion in Gegenwart eines harnstoffgruppenhaltigen Polyurethanharzes, das keine Vinylgruppen enthält, polymerisiert werden. Wenn die in der EP-A-297 576 beschriebenen wäßrigen Lacke in dem oben beschriebenen Verfahren zur Herstellung von zweischichtigen Lackierungen als Basislacke eingesetzt werden, dann werden zweischichtige Lackierungen erhalten, die hinsichtlich ihrer Beständigkeit gegenüber Kondenswasser verbesserungsbedürftig sind. Außerdem werden bei den in der EP-A-297 576 beschriebenen wäßrigen Lacke oft mangelnde Lagerstabilität und auf Unverträglichkeiten zurückzuführende Störungen beobachtet, wenn Kombinationen aus verschiedenen Bindemitteln eingesetzt werden.

In der DE-A-40 10 176 wird ein Verfahren zur Herstellung einer zweischichtigen Lackierung beschrieben, bei dem ein wäßriger Basislack eingesetzt wird, der als Bindemittel ein Polymer enthält, das erhältlich ist, indem in einem organischen Lösemittel ethylenisch ungesättigte Monomere in Gegenwart eines Polyurethanharzes, das polymerisierbare Doppelbindungen enthält, polymerisiert werden und das so erhaltene Reaktionsprodukt in eine wäßrige Dispersion überführt wird. Wenn in dem in der DE-A-40 10 176 beschriebenen Verfahren metallpigmenthaltige Basislacke eingesetzt werden, werden zweischichtige Metalleffektlackierungen erhalten, die hinsichtlich ihres Metalleffektes verbesserungsbedürftig sind. Außerdem wird bei der Herstellung der in der DE-A-40 10 176 beschriebenen wäßrigen Basislacke nachteiligerweise eine große Menge an organischen Lösemitteln benötigt.

Die EP-A-0 522 420 offenbart die Herstellung einer Polyurethan-Dispersion durch die radikalisch initiierte Polymerisation von Polyurethan-Makromonomeren mit copolymerisierbaren ungesättigten Monomeren. Die Polyurethan-Makromonomere enthalten mindestens eine Vinylgruppe mit einer polymerisierbaren Doppelbindung pro Molekül. Dieses Dokument beschäftigt sich also ausschließlich mit der (Co)Polymerisation von Polyurethan-Makromonomeren.

Ferner wird in der EP-A-0 522 420 zwar auch die Überlackierung angesprochen, indes wird nicht auf einen Metalleffekt eingegangen. Zudem geht aus dem genannten Dokument hervor, daß die dortige Art der Zweischichtlackierungen und Reparaturlackierungen noch erheblich verbesserungsbedürftig sind.

Die der vorliegenden Erfindung zugrundeliegende Aufgabe bestand in der Bereitstellung eines neuen Verfahrens zur Herstellung von zweischichtigen Lackierungen der oben beschriebenen Art, mit dem zweischichtige Lackierungen erhalten werden, die im Vergleich zum Stand der Technik verbesserte Eigenschaften haben und insbesondere die oben beschriebenen Nachteile des Standes der Technik nicht bzw. in vermindertem Ausmaß aufweisen.

Diese Aufgabe wird überraschenderweise durch ein Verfahren zur Herstellung einer zweischichtigen Lackierung auf einer Substratoberfläche, bei dem die oben beschriebenen Stufen (1) bis (4) durchlaufen werden und der Basislack als Bindemittel ein Polymer enthält, das erhältlich ist, indem
(A) in einer wäßrigen Dispersion eines Polyurethanharzes, das erhältlich aus
   (a) einem Polyester- und/oder Polyetherpolyol mit einem zahlenmittleren Molekulargewicht von 400 bis 5000 oder einem Gemisch aus solchen Polyester- und/oder Polyetherpolyolen,
   (b) einem Polyisocyanat oder einem Gemisch aus Polyisocyanaten, gegebenenfalls zusammen mit einem Monoisocyanat oder einem Gemisch aus Monoisocyanaten,
   (c) einer Verbindung, die mindestens eine gegenüber Isocyanat-gruppen reaktive und mindestens eine zur Anionenbildung befähigte Gruppe im Molekül aufweist, oder einem Gemisch aus solchen Verbindungen oder
   (d) einer Verbindung, die mindestens eine gegenüber NCO-Gruppen reaktive Gruppe und mindestens eine Poly(oxyalkylen)gruppe im Molekül aufweist, oder einem Gemisch aus solchen Verbindungen oder
   (e) einer Mischung aus den Komponenten (c) und (d)
   und ein zahlenmittleres Molekulargewicht von 1.000 bis 30.000 und eine Säurezahl von 15 bis 80 aufweist,
(B) ein ethylenisch ungesättigtes Monomer oder ein Gemisch aus ethylenisch ungesättigten Monomeren in Gegenwart eines wasserunlöslichen Initiators oder einer Mischung aus wasserunlöslichen Initiatoren radikalisch polymerisiert wird, wobei
(C) das Gewichtsverhältnis zwischen dem Polyurethanharz und dem ethylenisch ungesättigten Monomeren bzw. dem Gemisch aus ethylenisch ungesättigten Monomeren zwischen 1:10 und 10:1 liegt,
und das dadurch gekennzeichnet, daß das Polyurethanharz im statistischen Mittel pro Molekül 0,2 bis 0,9 Doppelbindungen enthält,
gelöst.

Die nach dem erfindungsgemäßen Verfahren hergestellten zweischichtigen Lackierungen weisen in den Fällen, in denen ein metallpigmenthaltiger Basislack eingesetzt wird, einen ausgezeichneten Metalleffekt auf. Die Haftung zwischen Basislackschicht und Substrat sowie die Haftung zwischen Basislackschicht und Klarlackschicht ist ausgezeichnet. Außerdem weisen die nach dem erfindungsgemäßen Verfahren hergestellten zweischichtigen Lackierungen eine sehr gute Beständigkeit gegenüber hoher Luftfeuchtigkeit auf. Die erfindungsgemäß eingesetzten wäßrigen Basislacke sind lagerstabil und weisen auch beim Einsatz von Kombinationen aus verschiedenen Bindemitteln keine auf Unverträglichkeitserscheinungen zurückzuführende Störungen auf.

Die wäßrige Dispersion des Polyurethanharzes, in der das ethylenisch ungesättigte Monomer bzw. das Gemisch aus ethylenisch ungesättigten Monomeren in Gegenwart eines wasserunlöslichen Initiators oder einer Mischung aus wasserunlöslichen Initiatoren radikalisch polymerisiert wird, ist herstellbar, indem aus
(a) einem Polyester- und/oder Polyetherpolyol mit einem zahlenmittleren Molekulargewicht von 400 bis 5000 oder einem Gemisch aus solchen Polyester- und/oder Polyetherpolyolen und
(b) einem Polyisocyanat oder einem Gemisch aus Polyisocyanaten, gegebenenfalls zusammen mit einem Monoisocyanat oder einem Gemisch aus Monoisocyanaten und
(c) einer Verbindung, die mindestens eine gegenüber Isocyanatgruppen reaktive und mindestens eine zur Anionenbildung befähigte Gruppe im Molekül aufweist oder einem Gemisch aus solchen Verbindungen oder
(d) einer Verbindung, die mindestens eine gegenüber NCO-Gruppen reaktive Gruppe und mindestens eine Poly(oxyalkylen)gruppe im Molekül aufweist, oder einem Gemisch aus solchen Verbindungen oder
(e) einer Mischung aus den Komponenten (c) und (d) und
(f) gegebenenfalls einer Verbindung, die neben einer polymerisierbaren Doppelbindung mindestens noch eine gegenüber NCO-Gruppen reaktive Gruppe enthält oder einem Gemisch aus solchen Verbindungen und
(g) gegebenenfalls einer Hydroxyl- und/oder Aminogruppen enthaltenden organischen Verbindung mit einem Molekulargewicht von 60 bis 399 oder einem Gemisch aus solchen Verbindungen,
ein Polyurethanharz, das ein zahlenmittleres Molekulargewicht von 1.000 bis 30.000, vorzugsweise 1500 bis 20.000 und eine Säurezahl von 15 bis 20 aufweist und im statistischen Mittel 0,2 bis 0,9 polymerisierbare Doppelbindungen enthält, hergestellt und in Wasser dispergiert wird.

Das Polyurethanharz kann sowohl in Substanz als auch in organischen Lösemitteln hergestellt werden.

Das Polyurethanharz kann durch gleichzeitige Umsetzung aller Ausgangsverbindungen hergestellt werden. In vielen Fällen ist es jedoch zweckmäßig, das Polyurethanharz stufenweise herzustellen. So ist es zum Beispiel möglich, aus den Komponenten (a) und (b) ein isocyanatgruppenhaltiges Präpolymer herzustellen, das dann mit der Komponente (c) oder (d) oder (e) weiter umgesetzt wird. Weiter ist es möglich, aus den Komponenten (a) und (b) und (c) oder (d) oder (e) und gegebenenfalls (f) ein isocyanatgruppenhaltiges Präpolymer herzustellen, das dann mit der Komponente (g) zu einem höhermolekularen Polyurethanharz umgesetzt werden kann. Die Umsetzung mit der Komponente (g) kann in Substanz oder - wie beispielsweise in der EP-A-297 576 beschrieben - in Wasser durchgeführt werden. In den Fällen, in denen als Komponente (f) eine Verbindung eingesetzt wird, die nur eine gegenüber Isocyanatgruppen reaktive Gruppe enthält, kann in einer ersten Stufe aus (b) und (f) ein isocyanatgruppenhaltiges Vorprodukt hergestellt werden, das anschließend mit den weiteren Komponenten weiter umgesetzt werden kann.

Die Umsetzung der Komponenten (a) bis (g) kann auch in Gegenwart von Katalysatoren, wie z.B. Dibutylzinndilaurat, Dibutylzinnmaleat und tertiären Aminen durchgeführt werden.

Die einzusetzenden Mengen an Komponente (a), (b), (c), (d), (e), (f) und (g) ergeben sich aus dem anzustrebenden zahlenmittleren Molekulargewicht und der anzustrebenden Säurezahl. Die polymerisierbaren Doppelbindungen können durch Einsatz von polymerisierbare Doppelbindungen aufweisende (a) Komponenten und/oder polymerisierbare Doppelbindungen aufweisende (b) Komponenten und/oder die Komponente (f) in die Polyurethanmoleküle eingeführt werden. Es ist bevorzugt, die polymerisierbaren Doppelbindungen über die Komponente (f) einzuführen. Außerdem ist es bevorzugt, Acrylat-, Methacrylat oder Allylethergruppen als polymerisierbare Doppelbindungen enthaltende Gruppen in die Polyurethanharzmoleküle einzuführen.

Als Komponente (a) können gesättigte und ungesättigte Polyester- und/oder Polyetherpolyole, insbesondere Polyester- und/oder Polyetherdiole mit einem zahlenmittleren Molekulargewicht von 400 bis 5000 eingesetzt werden. Geeignete Polyetherdiole sind z.B. Polyetherdiole der allgemeinen Formel H(-O-(CHR¹)ₙ-)ₘOH, wobei R¹ = Wasserstoff oder ein niedriger, gegebenenfalls substituierter Alkylrest ist, n = 2 bis 6, bevorzugt 3 bis 4 und m = 2 bis 100, bevorzugt 5 bis 50 ist. Als Beispiele werden lineare oder verzweigte Polyetherdiole wie Poly(oxyethylen)glykole, Poly(oxypropylen)glykole und Poly(oxybutylen)glykole genannt. Die ausgewählten Polyetherdiole sollen keine übermäßigen Mengen an Ethergruppen einbringen, weil sonst die gebildeten Polymere in Wasser anquellen. Die bevorzugten Polyetherdiole sind Poly(oxypropylen) glykole im Molmassenbereich Mₙ von 400 bis 3000.

Polyesterdiole werden durch Veresterung von organischen Dicarbonsäuren oder ihren Anhydriden mit organischen Diolen hergestellt oder leiten sich von einer Hydroxycarbonsäure oder einem Lacton ab. Um verzweigte Polyesterpolyole herzustellen, können in geringem Umfang Polyole oder Polycarbonsäure mit einer höheren Wertigkeit eingesetzt werden. Die Dicarbonsäuren und Diole können lineare oder verzweigte aliphatische, cycloaliphatische oder aromatische Dicarbonsäuren oder Diole sein.

Die zur Herstellung der Polyester verwendeten Diole bestehen beispielsweise aus Alkylenglykolen, wie Ethylenglykol, Propylenglykol, Butylenglykol, Butandiol-1,4, Hexandiol-1,6, Neopentylglykol und anderen Diolen, wie Dimethylolcyclohexan. Es können jedoch auch kleine Mengen an Polyolen, wie Trimethylolpropan, Glycerin und Pentaerythrit zugesetzt werden. Die Säurekomponente des Polyesters besteht in erster Linie aus niedermolekularen Dicarbonsäuren oder ihren Anhydriden mit 2 bis 44, bevorzugt 4 bis 36 Kohlenstoffatomen im Molekül. Geeignete Säuren sind beispielsweise o-Phthalsäure, Isophthalsäure, Terephthalsäure, Tetrahydrophthalsäure, Cyclohexandicarbonsäure, Bernsteinsäure, Adipinsäure, Azelainsäure, Sebazinsäure, Maleinsäure, Fumarsäure, Glutarsäure, Hexachlorheptandicarbonsäure, Tetrachlorphthalsäure und/oder dimerisierte Fettsäuren. Anstelle dieser Säuren können auch ihre Anhydride, soweit diese existieren, verwendet werden. Bei der Bildung von Polyesterpolyolen können auch kleinere Mengen an Carbonsäuren mit 3 oder mehr Carboxylgruppen beispielsweise Trimellithsäureanhydrid oder das Addukt von Maleinsäureanhydrid an ungesättigte Fettsäuren anwesend sein.

Es können auch Polyesterdiole eingesetzt werden, die durch Umsetzung eines Lactons mit einem Diol erhalten werden. Sie zeichnen sich durch die Gegenwart von endständigen Hydroxylgruppen und wiederkehrenden Polyesteranteilen der Formel (-CO-(CHR²)ₙ-CH₂-O) aus. Hierbei ist n bevorzugt 4 bis 6 und der Substituent R² = Wasserstoff, ein Alkyl-, Cycloalkyl- oder Alkoxy-Rest. Kein Substituent enthält mehr als 12 Kohlenstoffatome. Die gesamte Anzahl der Kohlenstoffatome im Substituenten übersteigt 12 pro Lactonring nicht. Beispiele hierfür sind Hydroxycapronsäure, Hydroxybuttersäure, Hydroxydecansäure und/oder Hydroxystearinsäure.

Für die Herstellung der Polyesterdiole wird das unsubstituierte epsilon-Caprolacton, bei dem n den Wert 4 hat und alle R²-Substituenten Wasserstoff sind, bevorzugt. Die Umsetzung mit Lacton wird durch niedermolekulare Polyole wie Ethylenglykol, 1,3-Propandiol, 1,4-Butandiol und Dimethylolcyclohexan gestartet. Es können jedoch auch andere Reaktionskomponenten, wie Ethylendiamin, Alkyldialkanolamine oder auch Harnstoff mit Caprolacton umgesetzt werden. Als höhermolekulare Diole eignen sich auch Polylactamdiole, die durch Reaktion von beispielsweise epsilon-Caprolactam mit niedermolekularen Diolen hergestellt werden.

Wenn über die Komponente (a) polymerisierbare Doppelbindungen in die Polyurethanmoleküle eingeführt werden sollen, dann müssen (a) Komponenten eingesetzt werden, die polymerisierbare Doppelbindungen enthalten. Als Beispiele für solche (a) Komponenten werden Polyesterpolyole, vorzugsweise Polyesterdiole genannt, die unter Verwendung von polymerisierbare Doppelbindungen enthaltenden Polyolen oder Polycarbonsäuren, vorzugsweise polymerisierbare Doppelbindungen enthaltenden Polyolen hergestellt worden sind. Als Beispiele für polymeri-sierbare Doppelbindungen enthaltende Polyole werden genannt: Trimethylolpropanmonoallylether, Glycerinmonoallylether, Pentaerythritmono- und Pentaerythritdiallylether.

Als Komponente (b) können aliphatische und/oder cycloaliphatische und/oder aromatische Polyisocyanate eingesetzt werden. Als Beispiele für aromatische Polyisocyanate werden Phenylendiisocyanat, Toluylendiisocyanat, Xylylendiisocyanat, Biphenylendiisocyanat, Naphtylendiisocyanat und Diphenylmethandiisocyanat genannt.

Aufgrund ihrer guten Beständigkeit gegenüber ultraviolettem Licht ergeben (cyclo)aliphatische Polyisocyanate Produkte mit geringer Vergilbungsneigung. Beispiele für cycloaliphatische Polyisocyanate sind Isophorondiisocyanat, Cyclopentylendiisocyanat sowie die Hydrierungsprodukte der aromatischen Diisocyanate wie Cyclohexylendiisocyanat, Methylcyclohexylendiisocyanat und Dicyclohexylmethandiisocyanat. Aliphatische Diisocyanate sind Verbindungen der Formel

OCN-(CR³ ₂)ᵣ-NCO

worin r eine ganze Zahl von 2 bis 20, insbesondere 6 bis 8 ist und R³, das gleich oder verschieden sein kann, Wasserstoff oder einen niedrigen Alkylrest mit 1 bis 8 C-Atomen, vorzugsweise 1 oder 2 C-Atomen darstellt. Beispiele hierfür sind Trimethylendiisocyanat, Tetramethylendiisocyanat, Pentamethylendiisocyanat, Hexamethylendiisocyanat, Propylendiisocyanat, Ethylethylendiisocyanat, Dimethylethylendiisocyanat, Methyltrimethylendiisocyanat und Trimethylhexandiisocyanat. Als weiteres Beispiel für ein aliphatisches Diisocyanat wird Tetramethylxyloldiisocyanat genannt.

Besonders bevorzugt werden als Diisocyanate Hexamethylendiisocyanat, Isophorondiisocyanat, Tetramethylxyloldiisocyanat und Dicyclohexylmethandiisocyanat eingesetzt.

Die Komponente (b) muß hinsichtlich der Funktionalität der Polyisocyanate so zusammengesetzt sein, daß kein vernetztes Polyurethanharz erhalten wird. Die Komponente (b) kann neben Diisocyanaten auch einen Anteil an Polyisocyanaten mit Funktionalitäten über zwei - wie z.B. Triisocyanate - enthalten.

Als Triisocyanate haben sich Produkte bewährt, die durch Trimerisation oder Oligomerisation von Diisocyanaten oder durch Reaktion von Diisocyanaten mit Polyolen oder Polyaminen entstehen. Hierzu gehören beispielsweise das Biuret von Hexamethylendiisocyanat und Wasser, das Isocyanurat des Hexamethylendiisocyanats oder das Addukt von Isophorondiisocyanat an Trimethylolpropan. Die mittlere Funktionalität kann gegebenenfalls durch Zusatz von Monoisocyanaten gesenkt werden. Beispiele für solche kettenabbrechenden Monoisocyanate sind Phenylisocyanat, Cyclohexylisocyanat, 1-(1-isocyanato-1-methylethyl)-3-(1-methylethenyl) Benzol und Stearylisocyanat.

Um das in Rede stehende Polyurethanharz in Wasser stabil dispergieren zu können, muß es hydrophile Gruppen enthalten. Diese hydrophilen Gruppen werden durch die Komponente (c) oder die Komponente (d) oder die Komponente (e) in das Polyurethanharz eingeführt. Die zur Anionenbildung befähigten Gruppen der Komponente (c) werden vor oder während der Dispergierung des Polyurethanharzes in Wasser mit einer Base, vorzugsweise einem tertiären Amin, wie z.B. Dimethylethanolamin, Triethylamin, Tripropylamin und Tributylamin neutralisiert, so daß das Polyurethanharz nach der Neutralisation anionische Gruppen enthält. In dem Falle, in dem ausschließlich die Komponente (c) als hydrophile Gruppen liefernde Komponente eingesetzt wird, wird die Komponente (c) in einer solchen Menge eingesetzt, daß das Polyurethanharz eine Säurezahl von 15 bis 80, vorzugsweise 20 bis 60, aufweist. In dem Fall, in dem ausschließlich die Komponente (d) als hydrophile Gruppen liefernde Komponente eingesetzt wird, wird die Komponente (d) in einer solchen Menge eingesetzt, daß das Polyurethanharz 5 bis 40, vorzugsweise 10 bis 30 Gew.% Oxyalkylengruppen enthält, wobei evtl. durch die Komponente (a) eingeführte Oxyalkylengruppen mit einzurechnen sind. In dem Fall, in dem die Komponente (e) als hydrophile Gruppe liefernde Komponente eingesetzt wird, liegen die einzusetzenden Mengen an Komponente (c) und (d) entsprechend dem Mischungsverhältnis zwischen den oben angegebenen Werten für die Fälle, in denen die Komponente (c) bzw. (d) als alleiniger Lieferant für hydrophile Gruppen eingesetzt werden. Im übrigen kann der Fachmann die Mengen an einzusetzender Komponente (c), (d) oder (e) problemlos durch einfache Routineversuche ermitteln. Er muß lediglich mittels einfacher Reihenversuche prüfen, wie hoch der Anteil an hydrophilen Gruppen mindestens sein muß, um eine stabile wäßrige Polyurethanharzdispersion zu erhalten. Er kann selbstverständlich auch noch allgemein übliche Dispergierhilfsmittel, wie z.B. Emulgatoren mitverwenden, um die Polyurethanharzdispersionen zu stabilisieren. Die Mitverwendung von Dispergierhilfsmitteln ist jedoch nicht bevorzugt, weil dadurch im allgemeinen die Feuchtigkeitsempfindlichkeit der erhaltenen Lackierungen erhöht wird.

Als Komponente (c) werden vorzugsweise Verbindungen eingesetzt, die zwei gegenüber Isocyanatgruppen reaktive Gruppen im Molekül enthalten. Geeignete gegenüber Isocyanatgruppen reaktive Gruppen sind insbesondere Hydroxylgruppen, sowie primäre und/oder sekundäre Aminogruppen. Geeignete zur Anionenbildung befähigte Gruppen sind Carboxyl-, Sulfonsäure- und/oder Phosphonsäuregruppen, wobei Carboxylgruppen bevorzugt sind. Als Komponente (c) können beispielsweise Alkansäuren mit zwei Substituenten am α-ständigen Kohlenstoffatom eingesetzt werden. Der Substituent kann eine Hydroxylgruppe, eine Alkylgruppe oder bevorzugt eine Alkylolgruppe sein. Diese Alkansäuren haben mindestens eine, im allgemeinen 1 bis 3 Carboxylgruppen im Molekül. Sie haben zwei bis etwa 25, vorzugsweise 3 bis 10 Kohlenstoffatome. Beispiele für die Komponente (c) sind Dihydroxypropionsäure, Dihydroxybernsteinsäure und Dihydroxybenzoesäure. Eine besonders bevorzugte Gruppe von Alkansäuren sind die α,α-Dimethylolalkansäuren der allgemeinen Formel

R⁴-C(CH₂OH)₂COOH,

wobei
R⁴ für ein Wasserstoffatom oder eine Alkylgruppe mit bis zu etwa 20 Kohlenstoffatomen steht.

Beispiele für solche Verbindungen sind 2,2-Dimethylolessigsäure, 2,2-Dimethylolpropionsäure, 2,2-Dimethylolbuttersäure und 2,2-Dimethylolpentansäure. Die bevorzugte Dihydroxyalkansäure ist 2,2-Dimethylolpropionsäure. Aminogruppenhaltige Verbindungen sind beispielsweise a,w-Diaminovaleriansäure, 3,4-Diaminobenzoesäure, 2,4-Diaminotoluolsulfonsäure und 2,4-Diaminodiphenylethersulfonsäure.

Mit Hilfe der Komponente (d) können Poly(oxyalkylen)-gruppen als nichtionische stabilisierende Gruppen in die Polyurethanmoleküle eingeführt werden. Als Komponente (d) können beispielsweise eingesetzt werden: Alkoxypoly(oxyalkylen)alkohole mit der allgemeinen Formel R'O-(-CH₂-CHR"-O-)ₙ H in der R' für einen Alkylrest mit 1 bis 6 Kohlenstoffatomen, R" für ein Wasserstoffatom oder einen Alkylrest mit 1 bis 6 Kohlenstoffatomen und n für eine Zahl zwischen 20 und 75 steht.

Die Komponente (f) dient zur Einführung von polymerisierbaren Doppelbindungen in die Polyurethanharzmoleküle. Es ist bevorzugt, als Komponente (f) eine Verbindung einzusetzen, die mindestens eine gegenüber NCO-Gruppen reakive Gruppe und eine polymerisierbare Doppelbindung enthält. Besonders bevorzugt werden als Komponente (f) Verbindungen eingesetzt, die neben einer polymerisierbaren Doppelbindung noch zwei gegenüber NCO-Gruppen reaktive Gruppen enthalten. Als Beispiele für gegenüber NCO-Gruppen reaktive Gruppen werden -OH, -SH, > NH und -NH₂-Gruppen genannt, wobei -OH, > NH und NH₂-Gruppen bevorzugt sind. Als Beispiele für Verbindungen, die als Komponente (f) eingesetzt werden können, werden genannt: Hydroxy(meth)acrylate, insbesondere Hydroxyalkyl(meth)-acrylate wie Hyroxyethyl-, Hydroxypropyl-, Hydroxybutyl- oder Hydroxyhexyl(meth)acrylat und 2,3-Dihydroxypropyl(meth)acrylat, 2,3-Dihydroxypropylmonoallylether, 2,3-Dihydroxypropansäureallylester, Glycerinmono(meth)acrylat, Glycerinmonoallylether, Pentaerythritmono(meth)acrylat, Pentaerythritdi(meth)acrylat, Pentaerythritmonoallylether, Pentaeythritdiallylether, Trimethylolpropanmonoallylether, Trimethylpropanmono(meth)acrylat und Trimethylolpropandiallylether. Als Komponente (f) wird vorzugsweise Trimethylolpropanmonoallylether, Glycerinmono(meth)acrylat, Pentaerythritdi(meth)acrylat, Pentaerythritdiallyether, Glycerinmonoallylether und Trimethylolpropanmono(meth)acrylat eingesetzt. Als Komponente (f) werden besonders bevorzugt Trimethylolpropanmonoallylether, Glycerinmonoallylether und 2,3-Dihydroxypropansäureallylester eingesetzt. Es ist bevorzugt, die (f) Komponenten, die mindestens zwei gegenüber NCO-Gruppen reaktive Gruppen enthalten, kettenständig (nicht endständig) in die Polyurethanmoleküle einzubauen.

Als Komponente (g) können beispielsweise Polyole mit bis zu 36 Kohlenstoffatomen je Molekül wie Ethylenglykol, Diethylenglykol, Triethylenglykol, 1,2-Propandiol, 1,3-Propandiol, 1,4-Butandiol, 1,2-Butylenglykol, 1,6-Hexandiol, Trimethylolpropan, Ricinusöl oder hydriertes Ricinusöl, Di-trimethylolpropanether, Pentaerythrit, 1,2-Cyclohexandiol, 1,4-Cyclohexandimethanol, Bisphenol A, Bisphenol F, Neopentylglykol, Hydroxypivalinsäureneopentylglykolester, hydroxyethyliertes oder hydroxypropyliertes Bisphenol A, hydriertes Bisphenol A und deren Mischungen eingesetzt werden. Die Polyole werden im allgemeinen in Mengen von bis zu 30 Gewichtsprozent, vorzugsweise 2 bis 20 Gewichtsprozent, bezogen auf die eingesetzte Menge an Komponente (a) und (g) eingesetzt.

Als Komponente (g) können auch Di- und/oder Polyamine mit primären und/oder sekundären Aminogruppen eingesetzt werden. Polyamine sind im wesentlichen Alkylen-Polyamine mit 1 bis 40 Kohlenstoffatomen. Sie können Substituenten tragen, die keine mit Isocyanat-Gruppen reaktionsfähige Wasserstoffatome haben. Beispiele sind Polyamine mit linearer oder verzweigter aliphatischer, cycloaliphatischer oder aromatischer Struktur und wenigstens zwei primären Aminogruppen. Als Diamine sind zu nennen Hydrazin, Ethylendiamin, Propylendiamin, 1,4-Butylendiamin, Piperazin, 1,4-Cyclohexyldimethylamin, Hexamethylendiamin-1,6, Trimethylhexamethylendiamin, Menthandiamin, Isophorondiamin, 4,4'-Diaminodicyclohexylmethan und Aminoethylethanolamin. Bevorzugte Diamine sind Hydrazin, Alkyl- oder Cycloalkyldiamine wie Propylendiamine und 1-Amino-3-aminomethyl-3,5,5-trimethylcyclohexan. Es können auch Polyamine als Komponente (g) eingesetzt werden, die mehr als zwei Aminogruppen im Molekül enthalten. In diesen Fällen ist jedoch - z.B. durch Mitverwendung von Monoaminen - darauf zu achten, daß keine vernetzten Polyurethanharze erhalten werden. Solche brauchbaren Polyamine sind Diethylentriamin, Triethylentetramin, Dipropylentriamin und Dibutylentriamin. Als Beispiel für ein Monoamin wird Ethylhexylamin genannt.

Das in den erfindungsgemäß eingesetzten Basislacken enthaltene Bindemittel ist erhältlich, indem in der oben beschrieben wäßrigen Polyurethanharzdispersion ein ethylenisch ungesättigtes Monomer oder ein Gemisch aus ethylenisch ungesättigten Monomeren in Gegenwart eines wasserunlöslichen Initiators oder einer Mischung aus wasserunlöslichen Initiatoren radikalisch polymerisiert wird, wobei das Gewichtsverhältnis zwischen dem Polyurethanharz und dem ethylenisch ungesättigten Monomer bzw. dem Gemisch aus ethylenisch ungesättigten Monomeren zwischen 1:10 und 10:1, vorzugsweise zwischen 1:2 und 2:1 liegt.

Als ethylenisch ungesättigte Monomeren können eingesetzt werden:
(i) aliphatische oder cycloaliphatische Ester der Acrylsäure oder Methacrylsäure, die weder Hydroxyl- noch Carboxylgruppen enthalten oder ein Gemisch aus solchen Estern und
(ii) mindestens eine Hydroxylgruppe im Molekül tragende ethylenisch ungesättigte Monomere oder ein Gemisch aus solchen Monomeren und
(iii) mindestens eine Carboxylgruppe im Molekül tragende ethylenisch ungesättigte Monomere oder ein Gemisch aus solchen Monomeren und
(iv) weitere von (i), (ii) und (iii) verschiedene ethylenisch ungesättigte Monomere oder ein Gemisch aus solchen Monomeren und
(v) polyungesättigte Monomere, insbesondere ethylenisch polyungesättigte Monomere
sowie Mischungen aus den Komponenten (i), (ii), (iii), (iv) und (v).

Als ethylenisch ungesättigte Monomere werden vorzugsweise Mischungen eingesetzt, die aus 40 bis 100, vorzugsweise 60 bis 90 Gew.% der Komponente (i), 0 bis 30, vorzugsweise 0 bis 25 Gew.% der Komponente (ii), 0 bis 10, vorzugsweise 0 bis 5 Gew.%, ganz besonders bevorzugt 0 Gew.% der Komponente (iii) und 0 bis 50, vorzugsweise 0 bis 30 Gew.% der Komponente (iv) sowie 0 bis 5, vorzugsweise 0 Gew.% der Komponente (v), wobei die Summe der Gewichtsanteile von (i), (ii), (iii), (iv) und (v) stets 100 Gew.% ergibt.

Als Komponente (i) können z.B. eingesetzt werden: Cyclohexylacrylat, Cyclohexylmethacrylat, Alkylacrylate und Alkylmethacrylate mit bis zu 20 Kohlenstoffatomen im Alkylrest, wie z.B. Methyl-, Ethyl-, Propyl-, Butyl-, Hexyl-, Ethylhexyl-, Stearyl- und Laurylacrylat und -methacrylat oder Gemische aus diesen Monomeren.

Als Komponente (ii) können z.B. eingesetzt werden: Hydroxyalkylester der Acrylsäure, Methacrylsäure oder einer anderen α,β-ethylenisch ungesättigten Carbonsäure. Diese Ester können sich von einem Alkylenglykol ableiten, das mit der Säure verestert ist, oder sie können durch Umsetzung der Säure mit einem Alkylenoxid erhalten werden. Als Komponente (ii) werden vorzugsweise Hydroxyalkylester der Acrylsäure und Methacrylsäure, in denen die Hydroxyalkylgruppe bis zu 6 Kohlenstoffatome enthält, oder Mischungen aus diesen Hydroxyalkylestern eingesetzt. Als Beispiele für derartige Hydroxyalkylester werden 2-Hydroxyethylacrylat, 2-Hydroxypropylacrylat, 2-Hydroxypropylmethacrylat, 3-Hydroxypropylacrylat, 3-Hydroxypropylmethacrylat, 2-Hydroxyethylmethacrylat, 3-Hydroxybutyl(meth)acrylat oder 4-Hydroxybutyl(meth)acrylat genannt. Entsprechende Ester von anderen ungesättigten Säuren, wie z.B. Ethacrylsäure, Crotonsäure und ähnlichen Säuren mit bis zu etwa 6 Kohlenstoffatomen pro Molekül können auch eingesetzt werden.

Als Komponente (iii) werden vorzugsweise Acrylsäure und/oder Methacrylsäure eingesetzt. Es können aber auch andere ethylenisch ungesättigte Säuren mit bis zu 6 Kohlenstoffatomen im Molekül eingesetzt werden. Als Beispiele für solche Säuren werden Ethacrylsäure, Crotonsäure, Maleinsäure, Fumarsäure und Itaconsäure genannt.

Als Komponente (iv) können z.B. eingesetzt werden: vinylaromatische Kohlenwasserstoffe, wie Styrol, α-Alkylstyrol und Vinyltoluol, Acryl- und Methacrylamid und Acryl- und Methacrylnitril oder Gemische aus diesen Monomeren.

Als Komponenten (v) können Verbindungen eingesetzt werden, die mindestens zwei radikalisch polymerisierbare Doppelbindungen im Molekül enthalten. Als Beispiele werden genannt: Divinylbenzol, p-Methyldivinylbenzol, o-Nonyldivinylbenzol, Ethandioldi(meth)acrylat, 1,4-Butandioldi(meth)acrylat, 1,6-Hexandioldi(meth)acrylat, Trimethylolpropantri(meth)acrylat, Pentaerythritdi(meth)acrylat, Allylmethacrylat, Diallylphthalat, Butandioldivinylether, Divinylethylenharnstoff, Divinylpropylenharnstoff, Maleinsäurediallylester usw.

Als wasserunlösliche Initiatoren können beispielsweise wasserunlösliche Azoverbindungen und wasserunlösliche Peroxyverbindungen eingesetzt werden. Als Beispiele für wasserunlösliche Azoverbindungen werden 2,2-Azo-bis(isobutyronitril), 2,2'-Azo-bis-(isovaleronitril), 1,1'-Azo-bis-(cyclohexancarbonitril) und 2,2'-Azo-bis(2,4-dimethylvaleronitril) genannt. Als Beispiele für wasserunlösliche Peroxyverbindungen werden t-Amylperoxyethylhexanoat, t-Butylperoxyethylhexanoat, Dilaurylperoxid, Dibenzoylperoxid und 1,1-Dimethyl-3-hydroxybutyl-(1)-peroxyethylhexanoat genannt.

Es können selbstverständlich auch Polymerisationsregler zugesetzt werden.

Die Polymerisation des ethylenisch ungesättigten Monomers bzw. der Mischung aus ethylenisch ungesättigen Monomeren kann durchgeführt werden, indem das ethylenisch ungesättigte Monomer bzw. die Mischung aus ethylenisch ungesättigten Monomeren der wäßrigen Polyurethanharzdispersion langsam zugesetzt werden. Dabei ist es möglich, sowohl die gesamte Menge der Monomeren auf einmal zuzugeben als auch nur einen Teil vorzulegen und den Rest im Verlauf der Reaktion nachzudosieren. Die zu polymerisierenden Monomere können jedoch auch mit Hilfe eines Teils der Polyurethanharzdispersion und Wasser in eine Präemulsion gebracht werden, die dann langsam der Vorlage zugesetzt wird. Die Zulaufzeit der zu polymerisierenden Monomere beträgt im allgemeinen 2 - 8, vorzugsweise etwa 3 - 4 Stunden.

Die wasserunlöslichen Initiatoren können der Vorlage zugesetzt werden oder zusammen mit den Monomeren zugetropft werden. Sie können auch anteilsweise der Vorlage zugegeben werden, die einen Teil der Monomeren enthält. Der Rest an Initiator wird dann mit den restlichen Monomeren zudosiert. Die Reaktionstemperatur ergibt sich aus der Zerfallsgeschwindigkeit des Initiators bzw. Initiatorgemisches und kann gegebenenfalls durch geeignete organische Redoxsysteme herabgesetzt werden. Die Polymerisation des ethylenisch ungesättigten Monomers bzw. der Mischung aus ethylenisch ungesättigten Monomeren erfolgt im allgemeinen bei einer Temperatur von 30 bis 100 °C, insbesondere bei einer Temperatur von 60 bis 95 °C. Wenn bei Überdruck gearbeitet wird, können die Reaktionstemperaturen über 100 °C ansteigen.

Das ethylenisch ungesättigte Monomer bzw. das Gemisch aus ethylenisch ungesättigten Monomeren ist so auszuwählen, daß die auf die oben beschriebene Art und Weise erhaltenen Bindemittel eine Hydroxylzahl von 0 - 100, vorzugsweise 0 - 80 und eine Säurezahl von 10 - 40, vorzugsweise 15 - 30 aufweisen.

Aus den auf die oben beschriebene Art und Weise hergestellten wäßrigen Bindemitteldispersionen kann der Fachmann wäßrige Lacke herstellen, die in dem oben beschriebenen Verfahren zur Herstellung von zweischichtigen Lackierungen als Basislacke eingesetzt werden können. Dabei ist es unerheblich, ob es sich um ein Verfahren zur serienmäßigen Herstellung einer zweischichtigen Lackierung oder um ein Verfahren zur Herstellung einer zweischichtigen Lackierung für Reparaturzwecke handelt.

In Stufe (3) des oben beschriebenen Verfahrens können im Prinzip alle für dieses Verfahren geeigneten transparenten Decklacke, wie z.B. konventionelle transparente Decklacke auf Basis organischer Lösemittel, wäßrige transparente Decklacke oder transparente Pulverlacke verwendet werden.

Die erfindungsgemäß eingesetzten wäßrigen Basislacke können neben dem erfindungsgemäß eingesetzten Bindemittel noch weitere wasserverdünnbare Kunstharze, wie z.B. Aminoplastharze, Polyurethanharze, Polyacrylatharze, Polyesterharze usw. enthalten. Ein besonderer Vorteil der erfindungsgemäß eingesetzten wäßrigen Basislacke besteht darin, daß das erfindungsgemäß eingesetzte Bindemittel mit vielen zusätzlich eingesetzten Bindemitteln, wie z.B. Aminoplastharzen und Polyesterharzen gut verträglich ist.

Als Pigmente können die erfindungsgemäß eingesetzten Basislacke farbgebende Pigmente auf anorganischer Basis, wie z.B. Titandioxid, Eisenoxid, Ruß usw., farbgebende Pigmente auf organischer Basis sowie übliche Metallpigmente (z.B. handelsübliche Aluminiumbronzen, Edelstahlbronzen ...) und nichtmetallische Effektpigmente (z.B. Perlglanz bzw. Interferenzpigmente) enthalten. Die Pigmentierungshöhe liegt in üblichen Bereichen. Die erfindungsgemäßen Basislacke enthalten vorzugsweise mindestens ein Metallpigment und/oder ein nichtmetallisches Effektpigment.

Mit den erfindungsgemäßen wäßrigen Lacken können auch ohne Überlackierung mit einem transparenten Decklack qualitativ hochwertige Lackierungen hergestellt werden.

Die erfindungsgemäßen wäßrigen Lacke können auf beliebige Substrate, wie z.B. Metall, Holz, Kunststoff oder Papier aufgebracht werden. Der Auftrag kann direkt erfolgen oder, wie in der Automobilindustrie üblich, nach Aufbringen einer Elektrotauchgrundierung und eines Füllers.

Die erfindungsgemäßen wäßrigen Lacke können durch Spritzen, Rakeln, Tauchen, Walzen, vorzugsweise durch elektrostatisches und pneumatisches Spritzen appliziert werden. In den folgenden Beispielen wird die Erfindung näher erläutert. Alle Angaben zu Prozenten und Teilen sind Gewichtsangaben, wenn nicht ausdrücklich etwas anderes angegeben wird.

### 1. Herstellung einer erfindungsgemäßen Bindemitteldispersion

In einem Reaktionsgefäß mit Rührer, Innenthermometer, Rückflußkühler und elektrischer Heizung werden 178,5 g eines linearen Polyesters (aufgebaut aus dimerisierter Fettsäure (Pripol® 1013), Isophthalsäure und Hexandiol-1,6) mit einer Hydroxylzahl von 80 und einem zahlenmittleren Molekulargewicht von 400 nach Zusatz von 20,8 g Dimethylolpropionsäure und 7,4 g Trimethylolpropanmonoallylether in 44,6 g N-Methylpyrrolidon und 80,9 g Methylethylketon gelöst. Danach werden bei 45 °C 90,7 g Isophorondiisocyanat zugegeben. Nach Abklingen der exothermen Reaktion wird langsam auf 80°C erwärmt. Es wird bei dieser Temperatur gehalten, bis der NCO-Gehalt 1,8 % beträgt. Dann werden nach Abkühlen auf 50°C schnell hintereinander 14,9 g Triethylamin und 535,3 g deionisiertes Wasser zugegeben. Nach 15 Minuten wird dem gut dispergierten Harz ein Gemisch aus 7,6 g Aminoethylethanolamin und 19,3 g deionisiertem Wasser zugesetzt. Anschließend wird die Temperatur auf 60°C erhöht und das Methylethylketon im Vakuum abdestilliert. Die so erhaltene Dispersion weist einen Feststoffgehalt von 34,3 Gew.% (60 min bei 130 °C) und einen pH-Wert von 8,0 auf.

514,7 g der oben hergestellten Polyurethanharzdispersion werden mit 277,7 g deionisiertem Wasser verdünnt. Nach Erwärmen auf 85°C wird ein Gemisch aus 50,1 g Styrol, 50,1 g Methylmethacrylat, 37,5 g n-Butylacrylat und 37,5 g Hydroxyethylmethacrylat innerhalb von 3,5 Stunden langsam zugegeben. Mit Beginn der Zugabe dieser Mischung wird eine Lösung von 2,6 g t-Butylperoxyethylhexanoat in 30 g Methoxypropanol innerhalb von 4 Stunden zugegeben. Anschließend wird so lange bei 85°C gehalten bis die Monomeren vollständig abreagiert sind. Gegebenenfalls wird Initiator nachgegeben. Schließlich wird gegebenenfalls angefallenes Koagulat abfiltriert. Das Gewichtsverhältnis Polyurethanharz zu Acrylatmonomeren beträgt 1:1. Die so erhaltene Dispersion zeigt eine sehr gute Lagerstabilität und weist einen Feststoffgehalt von 34,8 Gew.% (60 min bei 130 °C) und einen pH-Wert von 7,2 auf.

### 2. Herstellung eines erfindungsgemäßen Basislackes

### 2.1 Herstellung einer Pigmentpaste

40 g einer handelsüblichen Aluminiumbronze (Aluminiumgehalt: 65 %) werden mit einem Gemisch aus 10 g Wasser, 10 g Butoxyethanol, 15 g eines handelsüblichen Hexamethoxymethylmelaminharzes und 70 g einer gemäß der Lehre der WO 92/15405 hergestellten 31 Gew.%igen Polyurethanharzdispersion angeteigt.

### 2.2 Herstellung des Basislackes

306 g der gemäß Punkt 1. hergestellten Bindemitteldispersion werden unter Rühren mit 5 g n-Methylmorpholin und 79 g Butoxyethanol vermischt.

Anschließend werden 250 g einer 3 %igen handelsüblichen Verdickerlösung auf Basis einer Polyacrylatdispersion unter Rühren zugegeben und mit N-Methylmorpholin auf einen pH-Wert zwischen 7,3 und 7,6 eingestellt. Dann wird die gemäß Punkt 2.1 hergestellte Pigmentpaste unter Rühren langsam zugegeben. Danach werden unter Rühren (ca. 800 U/min) 143 g Wasser langsam zugegeben. Schließlich wird mit Wasser auf eine Spritzviskosität von 30 s nach DIN 53211 eingestellt.

### 3. Herstellung einer Zweischichtlackierung unter Verwendung eines erfindungsgemäßen Basislackes

Der gemäß Punkt 2.2 hergestellte Basislack wird mit einer Fließbecherpistole auf ein mit einem handelsüblichen Elektrotauchlack und mit einem handelsüblichen Füller lackiertes Karosserieblech so aufgebracht, daß der 5 min bei 20 °C und 10 min bei 80 °C getrocknete Basislackfilm eine Trockenfilmdicke von etwa 15 µm aufweist. Auf den so getrockneten Basislackfilm wird ein handelsüblicher 2-Komponenten Klarlack überlackiert und 30 min lang bei 130 °C eingebrannt. Die Trockenfilmdicke der Klarlackschicht beträgt ca. 40 µm. Die so erhaltene Zweischichtlackierung weist einen ausgezeichneten Metalleffekt auf. Mehrere Tests nach der sogenannten Klebebandabrißmethode zeigen, daß die Haftung sowohl zwischen Basislackschicht und Klarlackschicht als auch die Haftung zwischen Füllerschicht und Basislackschicht ausgezeichnet ist. Um die Überlackierbarkeit mit einer Reparaturlackierung zu testen, wird der gemäß Punkt 2.2 hergestellte Basislack über die eingebrannte Zweischichtlackierung mit einer Fließbecherpistole so aufgebracht, daß der 5 min bei 20°C und 10 min bei 80°C getrocknete Basislackfilm eine Trockenfilmdicke von etwa 15 µm aufweist. Auf den so getrockneten Basislackfilm wird dann ein 2-Komponenten-Klarlack lackiert und 30 min lang bei 80 °C ausgehärtet. Die so erhaltene Reparaturlackierung weist einen ausgezeichneten Metalleffekt auf. Nach 240-stündiger Lagerung bei 40°C und 95 bis 100 % Luftfeuchtigkeit zeigt die Lackierung sowohl ohne als auch mit überlackierter Reparaturlackierung nach einer Regenerationsphase von einer Stunde keine Blasen, Quellungen oder Vermattungen.

### Vergleichsversuch

Es wird, wie unter den Punkten 1 bis 3 beschrieben, verfahren mit der einzigen Ausnahme, daß anstelle der gemäß Punkt 1 hergestellten erfindungsgemäßen Bindemitteldispersion eine äquivalente Menge der in Beispiel 1 der EP-A-353 797 beschriebenen Bindemitteldispersion eingesetzt wird. Es werden Lackierungen erhalten, die eine unbefriedigende bis völlig unzureichende Stabilität gegen hohe Luftfeuchtigkeit aufweisen.

## Patentansprüche

1. Verfahren zur Herstellung einer zweischichtigen Lackierung auf einer Substratoberfläche, bei dem
(1) ein pigmentierter wäßriger Basislack auf die Substratoberfläche aufgebracht wird,
(2) aus dem in Stufe (1) aufgebrachten Basislack ein Polymerfilm gebildet wird,
(3) auf der so erhaltenen Basislackschicht ein transparenter Decklack aufgebracht wird und anschließend
(4) die Basislackschicht zusammen mit der Decklackschicht eingebrannt wird,
wobei der Basislack als Bindemittel ein Polymer enthält, das erhältlich ist, indem
(A) in einer wäßrigen Dispersion eines Polyurethanharzes, das erhältlich ist aus
a) einem Polyester- und/oder Polyetherpolyol mit einem zahlenmittleren Molekulargewicht von 400 bis 5000 oder einem Gemisch aus solchen Polyester- und/oder Polyetherpolyolen,
(b) einem Polyisocyanat oder einem Gemisch aus Polyisocyanaten, gegebenenfalls zusammen mit einem Monoisocyanat oder einem Gemisch aus Monoisocyanaten,
(c) einer Verbindung, die mindestens eine gegenüber Isocyanat-gruppen reaktive und mindestens eine zur Anionenbildung befähigte Gruppe im Molekül aufweist, oder einem Gemisch aus solchen Verbindungen oder
(d) einer Verbindung, die mindestens eine gegenüber NCO-Gruppen reaktive Gruppe und mindestens eine Poly(oxyalkylen)gruppe im Molekül aufweist, oder einem Gemisch aus solchen Verbindungen oder
(e) einer Mischung aus den Komponenten (c) und (d)
und ein zahlenmittleres Molekulargewicht von 1.000 bis 30.000 und eine Säurezahl von 15 bis 80 aufweist,
(B) ein ethylenisch ungesättigtes Monomer oder ein Gemisch aus ethylenisch ungesättigten Monomeren in Gegenwart eines wasserunlöslichen Initiators oder einer Mischung aus wasserunlöslichen Initiatoren radikalisch polymerisiert wird, wobei
(C) das Gewichtsverhältnis zwischen dem Polyurethanharz und dem ethylenisch ungesättigten Monomeren bzw. dem Gemisch aus ethylenisch ungesättigten Monomeren zwischen 1:10 und 10:1 liegt,
dadurch gekennzeichnet, daß das Polyurethanharz im statistischen Mittel pro Molekül 0,2 bis 0,9 Doppelbindungen enthält.

2. Das Verfahren nach Anspruch 1, dadurch gekennzeichnet, daß das Polyurethanharz Acrylat-, Methacrylat- und/oder Allylethergruppen als polymerisierbare Doppelbindungen enthaltende Gruppen enthält.

3. Das Verfahren nach Anspruch 1 oder 2, dadurch gekennzeichnet, daß das Polyurethanharz eine Säurezahl von 20 bis 60 aufweist.

4. Das Verfahren nach einem der Ansprüche 1 bis 3, dadurch gekennzeichnet, daß als ethylenisch ungesättigte Monomere ein Gemisch aus
(i) 40 bis 100 Gew.% eines aliphatischen oder cycloaliphatischen Esters der Acrylsäure oder Methacrylsäure, der weder Hydroxyl- noch Carboxylgruppen enthält, oder eines Gemisches aus solchen Estern,
(ii) 0 bis 30 Gew.% eines mindestens eine Hydroxylgruppe im Molekül tragenden ethylenisch ungesättigten Monomeren oder eines Gemisches aus solchen Monomeren,
(iii) 0 bis 10 Gew.% eines mindestens eine Carboxylgruppe im Molekül tragenden ethylenisch ungesättigten Monomeren oder eines Gemisches aus solchen Monomeren,
(iv) 0 bis 50 Gew.% eines von (i), (ii) und (iii) verschiedenen ethylenisch ungesättigten Monomeren oder eines Gemisches aus solchen Monomeren und
(v) 0 bis 5 Gew.% eines ethylenisch polyungesättigten Monomeren oder eines Gemisches aus solchen Monomeren,
eingesetzt werden, wobei die Summe der Gewichtsanteile von (i), (ii), (iii), (iv) und (v) stets 100 Gew.% ergibt.

5. Wäßrige Lacke, dadurch gekennzeichnet, daß sie als Bindemittel ein Polymer enthalten, das erhältlich ist, indem
(A) in einer wäßrigen Dispersion eines Polyurethanharzes, das erhältlich ist aus
a) einem Polyester- und/oder Polyetherpolyol mit einem zahlenmittleren Molekulargewicht von 400 bis 5000 oder einem Gemisch aus solchen Polyester- und/oder Polyetherpolyolen und
(b) einem Polyisocyanat oder einem Gemisch aus Polyisocyanaten, gegebenenfalls zusammen mit einem Monoisocyanat oder einem Gemisch aus Monoisocyanaten, und
(c) einer Verbindung, die mindestens eine gegenüber Isocyanat-gruppen reaktive und mindestens eine zur Anionenbildung befähigte Gruppe im Molekül aufweist, oder einem Gemisch aus solchen Verbindungen oder
(d) einer Verbindung, die mindestens eine gegenüber NCO-Gruppen reaktive Gruppe und mindestens eine Poly(oxyalkylen)gruppe im Molekül aufweist, oder einem Gemisch aus solchen Verbindungen oder
(e) einer Mischung aus den Komponenten (c) und (d),
ein zahlenmittleres Molekulargewicht von 1.000 bis 30.000 und eine Säurezahl von 15 bis 80 aufweist und im statistischen Mittel pro Molekül 0,2 bis 0,9 Doppelbindungen enthält,
(B) ein ethylenisch ungesättigtes Monomer oder ein Gemisch aus ethylenisch ungesättigten Monomeren in Gegenwart eines wasserunlöslichen Initiators oder einer Mischung aus wasserunlöslichen Initiatoren radikalisch polymerisiert wird, wobei
(C) das Gewichtsverhältnis zwischen dem Polyurethanharz und dem ethylenisch ungesättigten Monomeren bzw. dem Gemisch aus ethylenisch ungesättigten Monomeren zwischen 1:10 und 10:1 liegt,

6. Die wäßrigen Lacke nach Anspruch 5, dadurch gekennzeichnet, daß das Polyurethanharz Acrylat-, Meth-acrylat- und/oder Allylethergruppen als polymeri-sierbare Doppelbindungen enthaltende Gruppen enthält.

7. Die wäßrigen Lacke nach Anspruch 5 oder 6, dadurch gekennzeichnet, daß das Polyurethanharz eine Säurezahl von 20 bis 60 aufweist.

8. Die wäßrigen Lacke nach einem der Ansprüche 5 bis 7, dadurch gekennzeichnet, daß als ethylenisch ungesättigte Monomere ein Gemisch aus
(i) 40 bis 100 Gew.% eines aliphatischen oder cycloaliphatischen Esters der Acrylsäure oder Methacrylsäure, der weder Hydroxyl- noch Carboxylgruppen enthält, oder eines Gemisches aus solchen Estern,
(ii) 0 bis 30 Gew.% eines mindestens eine Hydroxylgruppe im Molekül tragenden ethylenisch ungesättigten Monomeren oder eines Gemisches aus solchen Monomeren,
(iii) 0 bis 10 Gew.% eines mindestens eine Carboxylgruppe im Molekül tragenden ethylenisch ungesättigten Monomeren oder eines Gemisches aus solchen Monomeren,
(iv) 0 bis 50 Gew.% eines von (i), (ii) und (iii) verschiedenen ethylenisch ungesättigten Monomeren oder eines Gemisches aus solchen Monomeren und
(v) 0 bis 5 Gew.% eines ethylenisch polyungesättigten Monomeren oder eines Gemisches aus solchen Monomeren,
eingesetzt werden, wobei die Summe der Gewichtsanteile von (i), (ii), (iii), (iv) und (v) stets 100 Gew.% ergibt.

9. Verwendung der wäßrigen Lacke nach einem der Ansprüche 5 bis 8 als Basislacke in einem Verfahren zur Herstellung von zweischichtigen Lackierungen auf Substratoberflächen, bei dem
(1) ein pigmentierter wäßriger Basislack auf die Substratoberfläche aufgebracht wird,
(2) aus dem in Stufe (1) aufgebrachten Basislack ein Polymerfilm gebildet wird,
(3) auf der so erhaltenen Basislackschicht ein transparenter Decklack aufgebracht wird und anschließend
(4) die Basislackschicht zusammen mit der Decklackschicht eingebrannt wird.

10. Verwendung der wäßrigen Lacke nach einem der Ansprüche 5 bis 8 zur Lackierung von Automobilkarosserien.

## Claims

1. Process for the preparation of a two-coat finish on a substrate surface, in which
(1) a pigmented aqueous basecoat is applied to the substrate surface,
(2) a polymer film is formed from the basecoat applied in step (1),
(3) a transparent topcoat is applied to the basecoat obtained in this way, and subsequently
(4) the basecoat and the topcoat are baked together,
characterized in that the basecoat contains as binder a polymer which can be obtained by subjecting an ethylenically unsaturated monomer or a mixture of ethylenically unsaturated monomers to free-radical polymerization in an aqueous dispersion of a polyurethane resin which has a number-average molecular weight of from 1000 to 30,000 and contains on average from 0.05 to 1.1 polymerizable double bonds per molecule, and in the presence of a water-insoluble initiator or of a mixture of water-insoluble initiators, the weight ratio of the polyurethane resin to the ethylenically unsaturated monomer or to the mixture of ethylenically unsaturated monomers being between 1:10 and 10:1.

2. Process according to Claim 1, characterized in that, as groups which contain polymerizable double bonds, the polyurethane resin contains acrylate, methacrylate and/or allyl ether groups.

3. Process according to Claim 1 or 2, characterized in that the polyurethane resin is anionic and has an acid number of from 20 to 60.

4. Process according to one of Claims 1 to 3, characterized in that the ethylenically unsaturated monomers employed are a mixture of
(i) from 40 to 100% by weight of an aliphatic or cycloaliphatic ester of acrylic acid or methacrylic acid, which contains neither hydroxyl nor carboxyl groups, or of a mixture of such esters,
(ii) from 0 to 30% by weight of an ethylenically unsaturated monomer which carries at least one hydroxyl group in the molecule, or of a mixture of such monomers,
(iii) from 0 to 10% by weight of an ethylenically unsaturated monomer which carries at least one carboxyl group in the molecule, or of a mixture of such monomers,
(iv) from 0 to 50% by weight of an ethylenically unsaturated monomer which is different from (i), (ii) and (iii), or of a mixture of such monomers, and
(v) from 0 to 5% by weight of an ethylenically polyunsaturated monomer or of a mixture of such monomers,
the sum of the proportions by weight of (i), (ii), (iii), (iv) and (v) always being 100% by weight.

5. Aqueous coating materials, characterized in sat [sic] they contain as binder a polymer which can be obtained by subjecting an ethylenically unsaturated monomer or a mixture of ethylenically unsaturated monomers to free-radical polymerization in an aqueous dispersion of a polyurethane resin which has a number-average molecular weight of from 1000 to 30,000 and contains on average from 0.05 to 1.1 polymerizable double bonds per molecule, and in the presence of a water-insoluble initiator or of a mixture of water-insoluble initiators, the weight ratio of the polyurethane resin to the ethylenically unsaturated monomer or to the mixture of ethylenically unsaturated monomers being between 1:10 and 10:1.

6. Aqueous coating materials according to Claim 5, characterized in that, as groups which contain polymerizable double bonds, the polyurethane resin contains acrylate, methacrylate and/or allyl ether groups.

7. Aqueous coating materials according to Claim 5 or 6, characterized in that the polyurethane resin is anionic and has an acid number of from 20 to 60.

8. Aqueous coating materials according to one of Claims 5 to 7, characterized in that the ethylenically unsaturated monomers employed are a mixture of
(i) from 40 to 100% by weight of an aliphatic or cycloaliphatic ester of acrylic acid or methacrylic acid, which contains neither hydroxyl nor carboxyl groups, or of a mixture of such esters,
(ii) from 0 to 30% by weight of an ethylenically unsaturated monomer which carries at least one hydroxyl group in the molecule, or of a mixture of such monomers,
(iii) from 0 to 10% by weight of an ethylenically unsaturated monomer which carries at least one carboxyl group in the molecule, or of a mixture of such monomers,
(iv) from 0 to 50% by weight of an ethylenically unsaturated monomer which is different from (i), (ii) and (iii), or of a mixture of such monomers, and
(v) from 0 to 5% by weight of an ethylenically polyunsaturated monomer or of a mixture of such monomers,
the sum of the proportions by weight of (i), (ii), (iii), (iv) and (v) always being 100% by weight.

9. Use of the aqueous coating materials according to one of Claims 5 to 8 as basecoats in a process for the preparation of two-coat finishes on substrate surfaces, in which
(1) a pigmented aqueous basecoat is applied to the substrate surface,
(2) a polymer film is formed from the basecoat applied in step (1),
(3) a transparent topcoat is applied to the basecoat obtained in this way, and subsequently
(4) the basecoat and the topcoat are baked together.

10. Use of the aqueous ccating materials according to one of Claims 5 to 8 for the finishing of car bodies.

## Revendications

1. Procédé de production d'un revêtement bicouche sur une surface de substrat, dans lequel
(1) un vernis de fond pigmenté aqueux est appliqué sur la surface de substrat,
(2) un film polymère est formé à partir du vernis de fond appliqué à l'étape (1),
(3) un vernis de finition transparent est appliqué sur la couche de vernis de fond ainsi obtenue et ensuite
(4) la couche de vernis de fond est cuite conjointement avec la couche de vernis de finition,
caractérisé en ce que la couche de fond contient, en tant que liant, un polymère qui peut être obtenu en polymérisant par voie radicalaire, dans une dispersion aqueuse d'une résine de polyuréthanne ayant un poids moléculaire moyen en nombre de 1 000 à 30 000 et renfermant, en moyenne statistique, 0,05 à 1,1 double liaison polymérisable par molécule, un monomère éthyléniquement insaturé ou un mélange de monomères éthyléniquement insaturés en présence d'un amorceur insoluble dans l'eau ou d'un mélange d'amorceurs insolubles dans l'eau, le rapport pondéral entre la résine de polyuréthanne et le monomère éthyléniquement insaturé ou le mélange de monomères éthyléniquement insaturés étant compris entre 1:10 et 10:1.

2. Procédé selon la revendication 1, caractérisé en ce que la résine de polyuréthanne contient des groupes acrylate, méthacrylate et/ou éther allylique en tant que groupes renfermant des doubles liaisons polymérisables.

3. Procédé selon la revendication 1 ou 2, caractérisé en ce que la résine de polyuréthanne est anionique et présente un indice d'acide de 20 à 60.

4. Procédé selon l'une quelconque des revendications 1 à 3, caractérisé en ce que l'on utilise, en tant que monomères éthyléniquement insaturés, un mélange de
(i) 40 à 100% en poids d'un ester aliphatique ou cycloaliphatique de l'acide acrylique ou de l'acide méthacrylique, qui ne contient ni groupe hydroxyle ni groupe carboxyle, ou d'un mélange de tels esters.
(ii) 0 à 30% en poids d'un monomère éthyléniquement insaturé portant au moins un groupe hydroxyle dans la molécule, ou d'un mélange de tels monomères,
(iii) 0 à 10% en poids d'un monomère éthyléniquement insaturé portant au moins un groupe carboxyle dans la molécule, ou d'un mélange de tels monomères,
(iv) 0 à 50% en poids d'un monomère éthyléniquement insaturé différent de (i), (ii) et (iii), ou d'un mélange de tels monomères et
(v) 0 à 5% en poids d'un monomère éthyléniquement polyinsaturé ou d'un mélange de tels monomères,
la somme des proportions pondérales de (i), (ii), (iii), (iv) et (v) étant toujours de 100%.

5. Vernis aqueux caractérisés en ce qu'ils contiennent, en tant que liant, un polymère qui peut être obtenu en polymérisant par voie radicalaire, dans une dispersion aqueuse d'une résine de polyuréthanne ayant un poids moléculaire moyen en nombre de 1 000 à 30 000 et renfermant, en moyenne statistique, 0,05 à 1,1 double liaison polymérisable par molécule, un monomère éthyléniquement insaturé ou un mélange de monomères éthyléniquement insaturés en présence d'un amorceur insoluble dans l'eau ou d'un mélange d'amorceurs insolubles dans l'eau, le rapport pondéral entre la résine de polyuréthanne et le monomère éthyléniquement insaturé ou le mélange de monomères éthyléniquement insaturés étant compris entre 1:10 et 10:1.

6. Vernis aqueux selon la revendication 5, caractérisés en ce que la résine de polyuréthanne contient des groupes acrylate, méthacrylate et/ou éther allylique en tant que groupes renfermant des doubles liaisons polymérisables.

7. Vernis aqueux selon la revendication 5 ou 6, caractérisés en ce que la résine de polyuréthanne est anionique et présente un indice d'acide de 20 à 60.

8. Vernis aqueux selon l'une quelconque des revendications 5 à 7, caractérisés en ce que l'on utilise en tant que monomères éthyléniquement insaturés, un mélange de
(i) 40 à 100% en poids d'un ester aliphatique ou cycloaliphatique de l'acide acrylique ou de l'acide méthacrylique, qui ne contient ni groupe hydroxyle ni groupe carboxyle, ou d'un mélange de tels esters,
(ii) 0 à 30% en pois d'un monomère éthyléniquement insaturé portant au moins un groupe hydroxyle dans la molécule, ou d'un mélange de tels monomères,
(iii) 0 à 10% en poids d'un monomère éthyléniquement insaturé portant au moins un groupe carboxyle dans la molécule, ou d'un mélange de tels monomères,
(iv) 0 à 50% en poids d'un monomère éthyléniquement insaturé différent de (i), (ii) et (iii), ou d'un mélange de tels monomères et
(v) 0 à 5% en poids d'un monomère éthyléniquement polyinsaturé ou d'un mélange de tels monomères,
la somme des proportions pondérales de (i), (ii), (iii), (iv) et (v) étant toujours de 100%.

9. Utilisation des vernis aqueux selon l'une quelconque des revendications 5 à 8 en tant que vernis de fond dans un procédé de production de revêtements bicouches sur des surfaces de substrat, dans lequel
(1) un vernis de fond pigmenté aqueux est appliqué sur la surface de substrat,
(2) un film polymère est formé à partir du vernis de fond appliqué à l'étape (1),
(3) un vernis de finition transparent est appliqué sur la couche de vernis de fond ainsi obtenue et ensuite
(4) la couche de vernis de fond est cuite conjointement avec la couche de vernis de finition.

10. Utilisation des vernis aqueux selon l'une quelconque des revendications 5 à 8 pour le revêtement de carrosseries automobiles.
